## Europäisches Patentamt
## European Patent Office
## Office européen des brevets

(19)

(11) Publication number: **0 070 383**
**B1**

(12) **EUROPEAN PATENT SPECIFICATION**

(45) Date of publication of patent specification: **12.02.86**

(51) Int. Cl.⁴: **B 23 K 35/30, C 22 C 38/54**

(21) Application number: **82104862.6**

(22) Date of filing: **03.06.82**

(54) **Homogeneous, ductile hardfacing foils.**

(30) Priority: **22.07.81 US 285882**
**22.07.81 US 285883**
**22.07.81 US 285884**

(43) Date of publication of application:
**26.01.83 Bulletin 83/04**

(45) Publication of the grant of the patent:
**12.02.86 Bulletin 86/07**

(84) Designated Contracting States:
**CH DE FR GB IT LI NL SE**

(56) References cited:
**EP-A-0 002 909**
**EP-A-0 016 916**
**EP-A-0 020 965**
**US-A-4 067 732**

(73) Proprietor: **ALLIED CORPORATION**
**Columbia Road and Park Avenue P.O. Box 2245R**
**(Law Dept.)**
**Morristown New Jersey 07960 (US)**

(72) Inventor: **Bose, Debasis**
**312 Quaker Church Road Apt. 6**
**Randolph New Jersey 07869 (US)**
Inventor: **Datta, Amitava**
**26 Deerfield Road**
**Mendham New Jersey 07945 (US)**
Inventor: **DeCristofaro, Nicholas John**
**114 Hillside Avenue**
**Chatham New Jersey 07928 (US)**
Inventor: **Henschel, Claude**
**Ten Eddystone Court**
**Redwood City California 94065 (US)**

(74) Representative: **Weber, Dieter, Dr. et al**
**Dr. Dieter Weber und Klaus Seiffert**
**Patentanwälte Gustav-Freytag-Strasse 25**
**Postfach 6145**
**D-6200 Wiesbaden 1 (DE)**

Courier Press, Leamington Spa, England.

**Description**

This invention relates to hardfacing of metal parts and, in particular, to a homogeneous, ductile material useful in hardfacing applications.

Hardfacing is a method of depositing a wear and corrosion resistant layer by melting suitable alloys in-situ. Only the surface of the base metal being hardfaced is brought to the melting point and the hardfacing rod, wire, or powder is melted and spread over the surface of the base metal.

Hardfacing is a fast, economical process used to repair or rebuild worn parts, thereby reducing the overall cost of operation and downtime. The process can be used to build composite parts, combining hardness, toughness and corrosion resistance at low cost. Suitable wear and corrosion resistant surface layers can be imparted to parts e.g. dies and forming tools, which are made of cheaper, shock resistant alloys such as plain carbon or low alloy steels. Moreover, hardfacing is employed in structures wherein a soft core is used to overcome stresses and a hard casing is used to resist wear. Examples of such structures include injection and extrusion screws utilized in plastics processing and the like. Many parts, which would otherwise be scrapped, are put back into service for less than the original cost. An additional saving is realized because the parts can be rebuilt in-situ where necessary.

Conventional hardfacing processes include: oxy-acetylene, tungsten inert gas welding (TIG), metal inert gas welding (MIG), submerged arc weld deposition plasma transferred arc welding and the like. Hardfacing alloys used in such processes contain a substantial amount (about 1 to 11 weight percent) of metalloid elements such as boron, silicon or carbon. Consequently, such alloys are very brittle and are available only in rod form or as powder.

One of the most troublesome problems with conventional hardfacing methods and materials is the difficulty of controlling the thickness and uniformity of the surface layer. The rigid rod-like structures used to advance hardfacing material to the heating zone cannot be economically adapted to continuous surfacing processes. Hardfacing rods are usually applied manually by tungsten inert gas or oxy-acetylene processes which are non-continuous and inherently slow. Continuous hardfacing has been achieved by automatic tungsten inert gas machines in which individual rods are fed by gravity, or by plasma transferred arc (PTA) welding procedures wherein powdered surfacing material is fed to the heating zone. Such procedures require equipment and materials that are relatively expensive. Moreover, the excessive heat generated by the plasma in PTA welding processes adversely affects flowability characteristics of the hardfacing alloy and dilutes the alloy with material from the base metal, changing the compositional uniformity of the surface layer. As a result, there remains a need in the art for an economical, continuous hardfacing process.

Ductile glassy metal alloys have been disclosed in US—A—3,856,513. These alloys include compositions having the formula $M_aY_bZ_c$, where M is a metal selected from the group consisting of iron, nickel, cobalt, vanadium and chromium, Y is an element selected from the group consisting of phosphorus, boron and carbon, and Z is an element selected from the group consisting of aluminum, silicon, tin, germanium, indium, antimony and beryllium, "a" ranges from about 60 to 90 percent, "b" ranges from about 10 to 30 atom percent and "c" ranges from about 0.1 to 15 atom percent. Also disclosed are glassy wires having the formula $T_iX_j$, where T is at least one transition metal and X is an element selected from the group consisting of phosphorus, boron, carbon, aluminum, silicon, tin, germanium, indium, beryllium and antimony, "i" ranges from about 70 to 87 atom percent. Such materials are conveniently prepared by rapid quenching from the melt using processing techniques that are now well-known in the art. No hardfacing compositions are disclosed therein, however.

The US—A—4 067 732 discloses amorphous metal alloys of the composition

$$M_{40-85}M'_{0-45}Cr_{0-20}M''_{0-20}B_{15-25},$$

where M is one of the elements iron, cobalt and nickel, M' is one or two elements iron, cobalt and nickel other than M and M'' is at least one element selected from the group consisting of vanadium, manganese, molybdenum, tungsten, niobium and tantalum.

The EP—A—00 16 916 discloses glassy homogeneous, ductile brazing foils having a composition consisting essentially of about 0 to 10 atom percent iron, about 0 to 20 atom percent chromium, about 3 to 5 atom percent molybdenum, about 5 to 35 atom percent cobalt, about 14 to 19 atom percent boron and the balance essentially nickel.

By the EP—A—00 20 965 glassy homogeneous, ductile brazing foils are disclosed which have a composition consisting essentially of 0 to 4 atom percent iron, 0 to 26 atom percent chromium, 0 to 20 atom percent nickel, 0 to 4 atom percent tungsten, 0 to 4 atom percent molybdenum, 0 to 20 atom percent boron, 0 to 12 atom percent silicon, 0 to 2 atom percent carbon and the balance essentially cobalt.

There remains a need in the art for a homogeneous, hardfacing material that is available in thin, ductile filamentary form.

In accordance with the invention, there is provided a hardfaced metal article having been hardfaced by a homogeneous, ductile foil which is composed of metastable material having at least 50 per cent glassy structure.

The hardfacing foil preferably, such filament has a composition consisting of 0 to about 25 atom

2

percent cobalt, 0 to about 30 atom percent nickel, 0 to about 30 atom percent chromium, 0 to about 5 atom percent tungsten, 0 to about 4 atom percent molybdenum, about 2 to about 25 atom percent boron, about 0 to about 15 atom percent silicon and 0 to about 5 atom percent carbon, the balance being iron and incidental impurities with the proviso that the total of iron, cobalt, nickel, chromium, tungsten and molybdenum ranges from about 70 to 88 atom percent and the total of boron, silicon and carbon ranges from about 12 to 30 atom percent; or consisting of 0 to about 25 atom percent cobalt, 0 to about 20 atom percent iron, 0 to about 15 atom percent chromium, 0 to about 16 atom percent tungsten, 0 to about 5 atom percent molybdenum, about 2 to about 25 atom percent boron, 0 to about 10 atom percent silicon and 0 to about 5 atom percent carbon, the balance being nickel and incidental impurities with the proviso that the total of iron, cobalt, nickel, chromium, tungsten and molybdenum ranges from about 70 to 88 atom percent and the total of boron, silicon and carbon ranges from about 12 to 30 atom percent; or consisting of 0 to about 32 atom percent nickel, 0 to about 10 atom percent iron, 0 to about 30 atom percent chromium, 0 to 2 atom percent tungsten, 0 to 4 atom % molybdenum, 2 to 25 atom percent boron, 0 to 15 atom percent silicon, 0 to about 2 atom percent manganese, 0 to 5 atom percent carbon, and the balance essentially cobalt and incidental impurities, with the proviso that the total of iron, cobalt, nickel, chromium, tungsten and molybdenum ranges from about 70 to 88 atom percent and the total of boron, silicon and carbon ranges from about 12 to 30 atom percent.

The hardfaced metal article according to the invention is prepared by means of a hardfacing filament. The hardfacing filament has a composition as shown above for the foil and has suitably a thickness not greater than 0.004 inch ($10.16 \times 10^{-3}$ cm,) and in particular a thickness in the range of 0.0005 to 0,004 inch ($1.27 \times 10^{-3}$ cm to $10.16 \times 10^{-3}$ cm). It has been found that use of hardfacing filament that is flexible, thin and homogeneous, as described above, has the potential of enhancing the speed of hardfacing and improves the hardness of the deposited surface layer.

More specifically, the hardfacing filament has a thickness of about 0.0005 to 0.004 inch ($1.27 \times 10^{-3}$ to $10.16 \times 10^{-3}$ cm).

The homogeneous hardfacing filament of the invention is fabricated by a process which comprises forming a melt of the composition and quenching the melt on a rotating quench wheel at a rate of at least about $10^5$°C/sec.

The filler metal filament is easily fabricable as homogeneous, ductile ribbon, which is useful for hardfacing. Further, the homogeneous, ductile hardfacing filament of the invention can reduce the deposit thickness, resulting in less dilution from the substrate and less cost in grinding of the deposited layer.

In accordance with the invention a homogeneous ductile hardfacing filamentary material in foil form is provided. The hardfacing foil is less than 0.004 inch ($10.16 \times 10^{-3}$ cm) thick, preferably about 0.004 to 0.002-inch thick ($10.16 \times 10^{-3}$ to $5.08 \times 10^{-3}$ cm) and has a composition as stated above.

These compositions are suitable for hardfacing low carbon and low alloy steels with a greater resistance to wear and corrosion.

By homogeneous is meant that the foil, as produced, is of substantially uniform composition in all dimensions. By ductile is meant that the foil can be bent to a round radius as small as ten times the foil thickness without fracture.

Examples of hardfacing alloy compositions within the scope of present invention are set forth in Table Ia, Ib and Ic below:

TABLE Ia

| | | Fe | Ni | Cr | B | Si | Mo | Co | W | C |
|---|---|---|---|---|---|---|---|---|---|---|
| Fe-Ni-Cr-B | a/o | 53 | 20 | 10 | 17 | — | — | — | — | — |
| | w/o | 61.3 | 24.2 | 10.7 | 3.8 | — | — | — | — | — |
| Fe-Ni-Cr-B-Mo-Co (1) | a/o | 35 | 10 | 10 | 16 | — | 4— | 25 | — | — |
| | w/o | 38.5 | 11.5 | 10.2 | 3.4 | — | 7.5 | 28.9 | — | — |
| Fe-Ni-Cr-B-Mo-Co (2) | a/o | 35 | 10 | 15 | 16 | — | 4 | 20 | — | — |
| | w/o | 38.6 | 11.6 | 15.4 | 3.4 | — | 7.6 | 23.3 | — | — |
| Fe-Ni-Cr-B-Si-Co-W | a/o | 39.9 | 8.6 | 17.4 | 14 | 8.9 | — | 8.5 | 2.7 | — |
| | w/o | 44 | 10 | 18 | 3 | 5 | — | 10 | 10 | — |

TABLE Ib

| | | Ni | Cr | Si | B | Fe | Co | Mo | W | C |
|---|---|---|---|---|---|---|---|---|---|---|
| Ni-Cr-Si-B-Fe | at% | 68 | 7 | 8 | 14 | 3 | — | — | — | — |
| (1) | wt% | 81.5 | 7.5 | 4.5 | 3.0 | 3.5 | — | — | — | — |
| Ni-Cr-Si-B-Fe | at% | 68 | 7 | 2 | 20 | 3 | — | — | — | — |
| (2) | wt% | 83.2 | 7.6 | 1.2 | 4.5 | 3.5 | — | — | — | — |
| Ni-Cr-B-Fe-Co-Mo | at% | 42.0 | 15.0 | — | 16.0 | 3.0 | 20.0 | 4.0 | — | — |
| (1) | wt% | 47.9 | 15.2 | — | 3.3 | 3.2 | 22.9 | 7.5 | — | — |
| Ni-Cr-B-Fe-Co-Mo | at% | 44.0 | 12.0 | — | 18.0 | 3.0 | 18.0 | 5.0 | — | — |
| (2) | wt% | 50.5 | 12.2 | — | 3.8 | 3.3 | 20.8 | 9.4 | — | — |
| Ni-Cr-B-Fe-Co-Mo | at% | 38.0 | 14.0 | — | 17.0 | 4.0 | 22.0 | 5.0 | — | — |
| (3) | wt% | 43.5 | 14.1 | — | 3.6 | 4.3 | 25.2 | 9.3 | — | — |
| Ni-Cr-Si-B-W | at% | 67.0 | 7.0 | 8.0 | 14.0 | — | — | — | 4.0 | — |
| | wt% | 72.8 | 6.7 | 4.1 | 2.8 | — | — | — | 13.6 | — |
| Ni-Cr-Si-B-Fe-W | at% | 62.5 | 12.0 | 3.5 | 2.5 | 3.5 | — | — | 16.0 | — |
| | wt% | 50.3 | 5.0 | 1.3 | 0.4 | 2.7 | — | — | 40.3 | — |
| Ni-Cr-Si-B-Fe-C | at% | 61.0 | 12.4 | 7.5 | 13.3 | 3.2 | | — | — | 2.6 |
| (1) | wt% | 74.5 | 13.5 | 4.35 | 3.0 | 4.0 | | — | — | 0.65 |
| Ni-Cr-Si-B-Fe-C | at% | 51.4 | 23.3 | 6.6 | 14.2 | 0.83 | | | | 3.68 |
| (2) | wt% | 64.7 | 26.0 | 4.0 | 3.3 | 1.0 | | | | 0.95 |

TABLE Ic

| | | Co | Cr | Ni | Fe | B | Si | Mo | Mn | W | C |
|---|---|---|---|---|---|---|---|---|---|---|---|
| Co-Ni-Fe-B-Si | at% | 39.4 | — | 30.9 | 6.9 | 9.8 | 13 | — | — | — | — |
| | wt% | 46.5 | — | 36.3 | 7.8 | 2.1 | 7.2 | — | — | — | — |
| Co-Fe-B-Si | at% | 70.3 | — | — | 5.7 | 8 | 16 | — | — | — | — |
| | wt% | 82.9 | — | — | 6.4 | 1.7 | 9 | — | — | — | — |
| Co-Ni-Fe-B-Si-Mo | at% | 43.8 | — | 21.9 | 7.3 | 13.0 | 12.0 | 2.0 | — | — | — |
| | wt% | 52.2 | — | 26.0 | 8.3 | 2.8 | 6.8 | 3.9 | — | — | — |
| Co-Fe-B-Si-Mo | at% | 65.2 | — | — | 5.3 | 12.5 | 13.0 | 4.0 | — | — | — |
| | wt% | 76.5 | — | — | 5.9 | 2.7 | 7.3 | 7.6 | — | — | — |
| Co-Cr-Fe-Ni-B-Si-Mn-W-C | at% | 48.4 | 26.3 | 2.5 | 2.6 | 11.7 | 1.7 | — | 1.3 | 1.0 | 4.5 |
| | wt% | 55.8 | 28.0 | 3.0 | 3.0 | 2.6 | 1.0 | — | 1.5 | 4.0 | 1.1 |
| Co-Cr-B-Si-W | at% | 62.9 | 21.2 | — | — | 11.6 | 3.0 | — | — | 1.3 | — |
| | wt% | 70.5 | 21.0 | — | — | 2.4 | 1.6 | — | — | 4.5 | — |

The hardfacing foils of the invention are prepared by cooling a melt of the desired composition at a rate of at least about $10^5°C/sec$, employing metal alloy quenching techniques well-known to the glassy metal alloy art; see, e.g., US—A—3,856,513 and US—A—4,148,973. The purity of all compositions is that found in normal commercial practice.

A variety of techniques are available for fabricating continuous ribbon, wire, sheet, etc. Typically, a particular composition is selected, powders or granules of the requisite elements in the desired portions are melted and homogenized, and the molten alloy is rapidly quenched on a chill surface, such as a rapidly rotating metal cylinder.

Under these quenching conditions, a metastable, homogeneous, ductile material is obtained. The metastable material may be glassy, in which case there is no long range order. X-ray diffraction patterns of glassy metal alloys show only a diffuse halo, similar to that observed for inorganic oxide glasses. Such

4

glassy alloys must be at least 50% glassy to be sufficiently ductile to permit subsequent handling, such as stamping complex shapes from ribbons of the alloys. Preferably, the glassy metal alloys must be at least 80% glassy, and most preferably substantially (or totally) glassy, to attain superior ductility.

The metastable phase may also be a solid solution of the constituent elements. In the case of the alloys of the invention, such metastable, solid solution phases are not ordinarily produced under conventional processing techniques employed in the art of fabricating crystalline alloys. X-ray diffraction patterns of the solid solution alloys show the sharp diffraction peaks characteristic of crystalline alloys, with some broadening of the peaks due to desired fine-grained size of crystallites. Such metastable materials are also ductile when produced under the conditions described above.

Hardfacing of metal substrates is readily accomplished in accordance with the invention by feeding a continuous filament from a spool or other similar wound supply source to a heating zone. The filament so fed is homogeneous and ductile, composed of metastable material having at least 50 percent glassy structure and has a composition as shown above for the hardfacing foil.

Heat is applied to the filament within the heating zone to melt the filament and cause it to become deposited on a work surface in close proximity thereto. The work surface is then permitted to cool, causing the deposited filament to form a hard, adherent coating thereon.

Examples
Example 1

Ribbons about 2.5 to 25.4 mm (about 0.10 to 1.00 inch) wide and about 13 to 60 µm (about 0.0005 to 0.0025 inch) thick were formed by squirting a melt of the particular composition by overpressure of argon onto a rapidly rotating copper chill wheel (surface speed about 3000 to 6000 ft/min or 914.4 to 1828.8 m/min). Metastable, homogeneous ribbons of substantially glassy alloys having the following compositions in weight percent and atom percent were produced. The compositions of the ribbons are set forth in Tables IIa, IIb and IIc below:

TABLE IIa

|  |  | Fe | Ni | Cr | B | Si | Mo | Co | W | C |
|---|---|---|---|---|---|---|---|---|---|---|
| Fe-Ni-Cr-B | at% | 53 | 20 | 10 | 17 | — | — | — | — | — |
|  | wt% | 61.3 | 24.2 | 10.7 | 3.8 | — | — | — | — | — |
| Fe-Ni-Cr-B-Mo-Co (1) | at% | 35 | 10 | 10 | 16 | — | 4 | 25 | — | — |
|  | wt% | 38.5 | 11.5 | 10.2 | 3.4 | — | 7.5 | 28.9 | — | — |
| Fe-Ni-Cr-B-Mo-Co (2) | at% | 35 | 10 | 15 | 16 | — | 4 | 20 | — | — |
|  | wt% | 38.6 | 11.6 | 15.4 | 3.4 | — | 7.6 | 23.3 | — | — |
| Fe-Ni-Cr-B-Si-Co-W | at% | 39.9 | 8.6 | 17.4 | 14 | 8.9 | — | 8.5 | 2.7 | — |
|  | wt% | 44 | 10 | 18 | 3 | 5 | — | 10 | 10 | — |

TABLE IIb

| | | Ni | Cr | Si | B | Fe | Co | Mo | W | C |
|---|---|---|---|---|---|---|---|---|---|---|
| Ni-Cr-Si-B-Fe (1) | at% | 68 | 7 | 8 | 14 | 3 | — | — | — | — |
| | wt% | 81.5 | 7.5 | 4.5 | 3.0 | 3.5 | — | — | — | — |
| Ni-Cr-Si-B-Fe (2) | at% | 68 | 7 | 2 | 20 | 3 | — | — | — | — |
| | wt% | 83.2 | 7.6 | 1.2 | 4.5 | 3.5 | — | — | — | — |
| Ni-Cr-B-Fe-Co-Mo (1) | at% | 42.0 | 15.0 | — | 16.0 | 3.0 | 20.0 | 4.0 | — | — |
| | wt% | 47.9 | 15.2 | — | 3.3 | 3.2 | 22.9 | 7.5 | — | — |
| Ni-Cr-B-Fe-Co-Mo (2) | at% | 44.0 | 12.0 | — | 18.0 | 3.0 | 18.0 | 5.0 | — | — |
| | wt% | 50.5 | 12.2 | — | 3.8 | 3.3 | 20.8 | 9.4 | — | — |
| Ni-Cr-B-Fe-Co-Mo (3) | at% | 38.0 | 14.0 | — | 17.0 | 4.0 | 22.0 | 5.0 | — | — |
| | wt% | 43.5 | 14.1 | — | 3.6 | 4.3 | 25.2 | 9.3 | — | — |
| Ni-Cr-Si-B-W | at% | 67.0 | 7.0 | 8.0 | 14.0 | — | — | — | 4.0 | — |
| | wt% | 72.8 | 6.7 | 4.1 | 2.8 | — | — | — | 13.6 | — |
| Ni-Cr-Si-B-Fe-W | at% | 62.5 | 12.0 | 3.5 | 2.5 | 3.5 | — | — | 16.0 | — |
| | wt% | 50.3 | 5.0 | 1.3 | 0.4 | 2.7 | — | — | 40.3 | — |
| Ni-Cr-Si-B-Fe-C (1) | at% | 61.0 | 12.4 | 7.5 | 13.3 | 3.2 | — | — | — | 2.6 |
| | wt% | 74.5 | 13.5 | 4.5 | 3.0 | 4.0 | — | — | — | 0.65 |
| Ni-Cr-Si-B-Fe-C (2) | at% | 51.4 | 23.3 | 6.6 | 14.2 | 0.83 | — | — | — | 3.68 |
| | wt% | 64.7 | 26.0 | 4.0 | 3.3 | 1.0 | — | — | — | 0.95 |

TABLE IIc

| | | Co | Cr | Ni | Fe | B | Si | Mo | Mn | W | C |
|---|---|---|---|---|---|---|---|---|---|---|---|
| Co-Ni-Fe-B-Si | at% | 39.4 | — | 30.9 | 6.9 | 9.8 | 13 | — | — | — | — |
| | wt% | 46.5 | — | 36.3 | 7.8 | 2.1 | 7.2 | — | — | — | — |
| Co-Fe-B-Si | at% | 70.3 | — | — | 5.7 | 8 | 16 | — | — | — | — |
| | wt% | 82.9 | — | — | 6.4 | 1.7 | 9 | — | — | — | — |
| Co-Ni-Fe-B-Si-Mo | at% | 43.8 | — | 21.9 | 7.3 | 13.0 | 12.0 | 2.0 | — | — | — |
| | wt% | 52.2 | — | 26.0 | 8.3 | 2.8 | 6.8 | 3.9 | — | — | — |
| Co-Fe-B-Si-Mo | at% | 65.2 | — | — | 5.3 | 12.5 | 13.0 | 4.0 | — | — | — |
| | wt% | 76.5 | — | — | 5.9 | 2.7 | 7.3 | 7.6 | — | — | — |
| Co-Cr-Fe-Ni-B-Si-Mn-W-C | at% | 48.4 | 26.3 | 2.5 | 2.6 | 11.7 | 1.7 | — | 1.3 | 1.0 | 4.5 |
| | wt% | 55.8 | 28.0 | 3.0 | 3.0 | 2.6 | 1.0 | — | 1.5 | 4.0 | 1.1 |
| Co-Cr-B-Si-W | at% | 62.9 | 21.2 | — | — | 11.6 | 3.0 | — | — | 1.3 | — |
| | wt% | 70.5 | 21.0 | — | — | 2.4 | 1.6 | — | — | 4.5 | — |

Ribbons of different alloy compositions were used to develop a hardfacing layer in accordance with the following procedure. The ribbon thickness varied from 0.001"—0.0025" ($2.54 \times 10^{-3}$ to $6.35 \times 10^{-3}$ cm). The ribbons were positioned relative to AISI 304 stainless steel sheets (about 0.0625" [$1.59 \times 10^{-1}$ cm] thick) and the composites were heated separately to the temperature of 1900—2300°F (1038—1260°C) varying from alloy to alloy in a vacuum furnace for about 15 minutes. The samples were then removed from the furnace, sectioned, mounted, and polished for microhardness measurement of the hardfaced layer.

The combustion and Knoop hardness values (100 gms load, 15 sec. indentation time) of each ribbon alloy tested are set forth in Tables IIIa, IIIb and IIIc.

6

TABLE IIIa

| | Composition (at %) | KHN 100 |
|---|---|---|
| 1 | $Fe_{53}Ni_{20}Cr_{10}B_{17}$ | 229 |
| 2 | $Fe_{35}Ni_{10}Cr_{10}B_{16}Mo_4Co_{25}$ | 183 |
| 3 | $Fe_{35}Ni_{10}Cr_{15}B_{16}Mo_4Co_{20}$ | 449 |
| 4 | $Fe_{39.9}Ni_{8.6}Cr_{17.4}B_{14}Si_{8.9}Co_{8.5}W_{2.7}$ | 197 |

TABLE IIIb

| Sample No. | Composition (at %) | Knoop hardness (load=100 gms) |
|---|---|---|
| 1 | $Ni_{68}Cr_7Si_8B_{14}Fe_3$ | 153 |
| 2 | $Ni_{68}Cr_7Si_2B_{20}Fe_3$ | 175 |
| 3 | $Ni_{42}Cr_{15}B_{16}Fe_3Co_{20}Mo_4$ | 182 |
| 4 | $Ni_{44}C_{12}B_{18}Fe_3Co_{18}Mo_5$ | 183 |
| 5 | $Ni_{38}Cr_{14}B_{17}Fe_4Co_{22}Mo_5$ | 397 |
| 6 | $Ni_{67}Cr_7Si_8B_{14}W_4$ | 146 |
| 7 | $Ni_{62.5}Cr_{12}Si_{3.5}B_{2.5}Fe_{3.5}W_{16}$ | 177 |
| 8 | $Ni_{61}Cr_{12.4}Si_{7.5}B_{13.3}Fe_{3.2}C_{0.65}$ | 227 |
| 9 | $Ni_{51.4}Cr_{23.3}Si_{6.6}B_{14.2}Fe_{0.83}C_{0.95}$ | 145 |

TABLE IIIc

| Sample No. | Composition (at %) | KHN 100 |
|---|---|---|
| 1 | $Co_{39.4}Ni_{30.9}Fe_{6.9}B_{9.8}Si_{13}$ | 133 |
| 2 | $Co_{70.3}Fe_{5.7}B_8Si_{16}$ | 257 |
| 3 | $Co_{43.8}Ni_{21.9}Fe_{7.3}B_{13}Si_{12}Mo_2$ | 222 |
| 4 | $Co_{65.2}Fe_{5.3}B_{12.5}Si_{13}Mo_4$ | 240 |
| 5 | $Co_{48.4}Cr_{26.3}Ni_{2.5}Fe_{2.6}B_{11.7}Si_{1.7}Mo_{1.3}W_{1.0}C_{4.5}$ | 186 |

Having thus described the invention in rather full detail it will be understood that these details need not be strictly adhered to but their various changes and modifications may suggest themselves to one skilled in the art, all falling within the scope of the invention as defined by the subjoined claims.

**Claims**

1. A hardfaced metal article, said article having been hardfaced by a homogeneous, ductile foil composed of metastable material having at least 50 percent glassy structure and a composition consisting of 0 to 25 atom percent cobalt, 0 to 30 atom percent nickel, 0 to 30 atom percent chromium, 0 to 5 atom percent tungsten, 0 to 4 atom percent molybdenum, 2 to 25 atom percent boron, 0 to 15 atom percent silicon, and 0 to 5 atom percent carbon, the balance being iron plus incidental impurities with the proviso that the total of iron, cobalt, nickel, chromium, tungsten and molybdenum ranges from 70 to 88 atom percent and the total of boron, silicon and carbon ranges from 12 to 30 atom percent.

2. A hardfaced metal article, said article having been hardfaced by a homogeneous, ductile foil composed of metastable material having at least 50 percent glassy structure and a composition consisting of 0 to 25 atom percent cobalt, 0 to 20 atom percent iron, 0 to 15 atom percent chromium, 0 to 16 atom percent tungsten, 0 to 5 atom percent molybdenum, 2 to 25 atom percent boron, 0 to 10 atom percent

7

## 0 070 383

silicon, 0 to 5 atom percent carbon, the balance being nickel plus incidental impurities with the proviso that the total of iron, cobalt, nickel, chromium, tungsten and molybdenum ranges from 70 to 88 atom percent and the total of boron, silicon and carbon ranges from 12 to 30 atom percent.

3. A hardfaced metal article, said article having been hardfaced by a homogeneous, ductile foil composed of metastable material having at least 50 percent glassy structure and a composition consisting of 0 to 32 atom percent nickel, 0 to 10 atom percent iron, 0 to 30 atom percent chromium, 0 to 2 atom percent tungsten, 0 to 4 atom percent molybdenum, 2 to 25 atom percent boron, 0 to 15 atom percent silicon, 0 to 2 atom percent manganese, and 0 to 5 atom percent carbon the balance being cobalt and incidental impurities with the proviso that the total of iron, cobalt, nickel, chromium, tungsten and molybdenum ranges from 70 to 88 atom percent and the total of boron, silicon and carbon ranges from 12 to 30 atom percent.

4. A process for hardfacing a metal substrate comprising the steps of:

a) feeding a continuous filament from a spool to a heating zone, said filament being homogeneous and ductile compound of metastable material having at least 50 percent glassy structure and having a composition as stated in one of the claims 1 to 3;

b) applying heat to said filament within said heating zone to melt said filament and cause it to become deposited on a work surface in close proximity thereto; and

c) cooling said work surface to cause said deposited filament to form a hard, adherent coating thereon.

### Patentansprüche

1. Mit Hartauftragschweißung versehener Metallgegenstand, der mit einer homogenen duktilen Folie bestückt ist, die aus einem metastabilen Material mit wenigstens 50% glasartiger Struktur und einer Zusammensetzung aufgebaut ist, welche aus 0 bis 25 Atom-% Kobalt, 0 bis 30 Atom-% Nickel, 0 bis 30 Atom-% Chrom, 0 bis 5 Atom-% Wolfram, 0 bis 4 Atom-% Molybdän, 2 bis 25 Atom-% Bor, 0 bis 15 Atom-% Silicium und 0 bis 5 Atom-% Kohlenstoff besteht, wobei der Rest aus Eisen und beiläufigen Verunreinigungen besteht und wobei die Gesamtheit von Eisen, Kobalt, Nickel, Chrom, Wolfram und Molybdän im Bereich von 70 bis 88 Atom-% und die Gesamtheit von Bor, Silicium und Kohlenstoff im Bereich von 12 bis 30 Atom-% liegt.

2. Mit Hartauftragschweißung versehener Metallgegenstand, der mit einer homogenen duktilen Folie bestückt ist, die aus einem metastabilen Material mit wenigstens 50% glasartiger Struktur und einer Zusammensetzung aufgebaut ist, die aus 0 bis 25 Atom-% Kobalt, 0 bis 20 Atom-% Eisen, 0 bis 15 Atom-% Chrom, 0 bis 15 Atom-% Wolfram, 0 bis 5 Atom-% Molybdän, 2 bis 25 Atom-% Bor, 0 bis 10 Atom-% Silicium und 0 bis 5 Atom-% Kohlenstoff besteht, wobei der Rest aus Nickel und beiläufigen Verunreinigungen besteht und wobei die Gesamtheit von Eisen, Kobalt, Nickel, Chrom, Wolfram und Molybdän im Bereich von 70 bis 88 Atom-% und die Gesamtheit von Bor, Silicium und Kohlenstoff im Bereich von 12 bis 30 Atom-% liegt.

3. Mit Hartauftragschweißung versehener Metallgegenstand, der mit einer homogenen, duktilen Folie bestückt ist, die aus einem metastabilen Material mit wenigstens 50% glasartiger Struktur und einer Zusammensetzung aufgebaut ist, die aus 0 bis 32 Atom-% Nickel, 0 bis 10 Atom-% Eisen, 0 bis 30 Atom-% Chrom, 0 bis 2 Atom-% Wolfram, 0 bis 4 Atom-% Molybdän, 2 bis 25 Atom-% Bor, 0 bis 15 Atom-% Silicium, 0 bis 2 Atom-% Mangan und 0 bis 5 Atom-% Kohlenstoff besteht, wobei der Rest aus Kobalt und beiläufigen Verunreinigungen besteht und wobei die Gesamtheit von Eisen, Kobalt, Nickel, Chrom, Wolfram und Molybdän im Bereich von 70 bis 88 Atom-% und die Gesamtheit von Bor, Silicium und Kohlenstoff im Bereich von 2 bis 30 Atom-% liegt.

4. Verfahren zur Aufbringung einer Hartauftragsschweißung auf einem Metallsubstrat mit den Stufen, bei denen man

a) einen zusammenhängenden Faden von einer Spule in eine Heizzone einführt, wobei dieser Faden eine homogene und duktile Verbindung eines metastabilen Materials mit wenigstens 50% glasartiger Struktur und mit einer Zusammensetzung, wie sie in den Ansprüchen 1 bis 3 angegeben ist, ist,

b) diesen Faden in der Heizzone erhitzt, um den Faden zu schmelzen und ihn sich auf einer Arbeitsoberfläche in naher Nachbarschaft zu ihm ablagern zu lassen, und

c) die Arbeitsoberfläche kühlt, um zu bewirken, daß der abgelagerte Faden darauf einen harten, anhaftenden Überzug bildet.

### Revendications

1. Un article métallique pourvu d'un rechargement dur, le dit article ayant été pourvu du rechargement dur au moyen d'une feuille ductile homogène composée d'un matériau métastable présentant au moins à 50% une structure vitreuse et une composition consistant en 0 à 25 pour-cent atomiques de cobalt, 0 à 30 pour-cent atomiques de nickel, 0 à 30 pour-cent atomiques de chrome, 0 à 5 pour-cent atomiques de tungstène, 0 à 4 pour-cent atomiques de molybdène, 2 à 25 pour-cent atomiques de bore, 0 à 15 pour-cent atomiques de silicium, et 0 à 5 pour-cent atomiques de carbone, le reste étant du fer et des impuretés inévitables, avec la condition que le total du fer, cobalt, nickel, chrome, tungstène et molybdène soit

8

compris entre 70 et 88 pour-cent atomiques et que le total du bore, silicium et carbone soit compris entre 12 et 30 pour-cent atomiques.

2. Un article métallique pourvu d'un rechargement dur, le dit article ayant été pourvu du rechargement dur au moyen d'une feuille ductile homogène composée d'un matériau métastable présentant au moins à 50% une structure vitreuse et une composition consistant en 0 à 25 pour-cent atomiques de cobalt, 0 à 20 pour-cent atomiques de fer, 0 à 15 pour-cent atomiques de chrome, 0 à 16 pour-cent atomiques de tungstène, 0 à 5 pour-cent atomiques de molybdène, 2 à 25 pour-cent atomiques de bore, 0 à 10 pour-cent atomiques de silicium, 0 à 5 pour-cent atomiques de carbone, le reste étant du nickel et des impuretés inévitables avec la condition que le total du fer, cobalt, nickel, chrome, tungstène et molybdène soit compris entre 70 et 88 pour-cent atomiques et que le total du bore, silicium et carbone soit compris entre 12 et 30 pour-cent atomiques.

3. Un article métallique pourvu d'un rechargement dur, le dit article ayant été pourvu du rechargement dur au moyen d'une feuille ductile homogène composée d'un matériau métastable présentant au moins à 50% une structure vitreuse et une composition consistant en 0 à 32 pour-cent atomiques de nickel, 0 à 10 pour-cent atomiques de fer, 0 à 30 pour-cent atomiques de chrome, 0 à 2 pour-cent atomiques de tungstène, 0 à 4 pour-cent atomiques de molybdène, 2 à 25 pour-cent atomiques de bore, 0 à 15 pour-cent atomiques de silicium, 0 à 2 pour-cent atomiques de manganèse, et 0 à 5 pour-cent atomiques de carbone, le reste étant du cobalt et des impuretés inévitables, avec la condition que le total du fer, cobalt, nickel, chrome, tungstène et molybdène soit compris entre 70 et 88 pour-cent atomiques et que le total du bore, silicium et carbone soit compris entre 12 et 30 pour-cent atomiques.

4. Un procédé de rechargement dur d'un substrat métallique, comprenant les étapes suivantes:

a) débiter un filament continu à partir d'une bobine dans une zone de chauffage, le dit filament étant un composé ductile et homogène d'un matériau métastable présentant au moins à 50% une structure vitreuse et une composition donnée dans une des revendications 1 à 3;

b) appliquer de la chaleur au dit filament dans la dite zone de chauffage, pour fondre le dit filament et provoquer son dépôt sur la surface d'une pièce, à proximité immédiate de celle-ci; et

c) refroidir la dite surface de pièce pour que le dit filament déposé y forme un revêtement dur adhérent.